# FASCICULE DE BREVET EUROPEEN

(11) **EP 0 474 717 B1**
(45) Date de publication et mention de la délivrance du brevet: **23.03.1994**
(21) Numéro de dépôt: 90908561.5
(22) Date de dépôt: 18.05.1990
(51) Int. Cl.: H04M 11/08

(54) **PROCEDE ET DISPOSITIFS POUR TRANSMETTRE A DES ABONNES A PARTIR D'UN SERVEUR CENTRAL BRANCHE SUR UN RESEAU DE TELECOMMUNICATION NUMERIQUE A GRAND DEBIT DES INFORMATIONS ENREGISTREES SUR DES DISQUES NUMERIQUES**
VERFAHREN UND VORRICHTUNGEN ZUR ÜBERTRAGUNG ZU TEILNEHMERN VON EINEM IN EINEM DIGITALEN KOMMUNIKATIONSNETZWERK HOHER GESCHWINDIGKEIT GESCHALTETEN ZENTRALEN DATENANBIETER
METHOD AND DEVICES FOR TRANSMITTING TO SUBSCRIBERS FROM A CENTRAL SERVER CONNECTED TO A HIGH THROUGHPUT DIGITAL TELECOMMUNICATION NETWORK INFORMATION RECORDED ON DIGITAL DISKS

(30) Priorité: 07.06.1989 FR 8907759
(43) Date de publication de la demande: 18.03.1992
(73) Titulaire: GENESE, F-84440 Robion (FR)
(72) Inventeur: CASTILLE, Jean-Paul, F-84300 Cavaillon (FR)
(86) Numéro de dépôt international: FR9000353
(87) Numéro de publication internationale: WO9015497

(56) Documents cités:
- US-A- 4 616 263
- Japan Telecommunications Review (JTR), vol. 28, no. 4, 4 octobre 1986; S. Yokoi: "New video response system (VRS) - The starting of "Medical VRS"", pages 264-270

## Description

La présente invention a pour objet un procédé et des dispositifs pour transmettre à des abonnés, à partir d'un serveur central branché sur un réseau de télécommunication numérique à grand débit, des informations enregistrées sur des disques numériques.

Le secteur technique de l'invention est celui de la construction des centres serveurs et de la transmission d'informations telles que des sons, des images ou des écrits.

On connait les disques numériques ou disques compacts sur lesquels on enregistre sous forme numérique des sons, par exemple de la musique, des chants ou des paroles, ou des signaux vidéo représentant des images ou des écrits par exemple des documents imprimés ou des logiciels.

On connait également les lecteurs de disques numériques qui permettent de convertir les informations numériques enregistrées sur le disque en signaux numériques ou en signaux analogiques qui sont envoyés sur des transducteurs qui transforment ceux-ci en sons, en images ou en écrits.

On connait par ailleurs, par exemple du document "Japan Telecommunications Review (JTR), volume 28, No. 4, 4 October 1986, S Yokoi: "New video response system (VRS) - The starting of "Medical VRS", pages 264-270," les centres serveurs qui comportent un ordinateur central dans la mémoire duquel des informations alphanumériques sont enregistrées sous forme de combinaisons de signaux binaires élémentaires. Le centre serveur est connecté à un réseau téléphonique et il peut être interrogé à partir de terminaux informatiques grand public munis d'un écran et d'un clavier ce qui permet d'obtenir sur l'écran des informations transmises par le centre serveur.

A côté des réseaux de télécommunication utilisés pour les communications téléphoniques, on construit de nouveaux réseaux numériques à grand débit par exemple en France le réseau numérique à intégration de services (RNIS) qui peut transporter 64 Kbit/ seconde.

Toutefois, le débit d'un tel réseau n'est pas suffisant pour transporter directement le débit d'informations délivré par un disque numérique sur lequel on a enregistré de la musique ou des images vidéo.

De plus, si l'on voulait enregistrer dans la mémoire d'un ordinateur la somme des informations numériques enregistrées sur une collection de disques numériques offrant un choix étendu, il faudrait utiliser une mémoire de très grande capacité.

L'objectif de la présente invention est de procurer un procédé et des dispositifs permettant d'utiliser un ordinateur central qui peut dialoguer avec des terminaux locaux à partir desquels des abonnés peuvent communiquer à l'ordinateur central un choix d'informations qu'ils désirent recevoir à domicile et de combiner cet ordinateur central avec une collection de disques numériques rangés dans un magasin central et avec un automate qui est commandé par l'ordinateur central et qui retire les disques sélectionnés un par un du magasin central et les amène sur des platines de lecture optique des dits disques.

L'objectif de l'invention est atteint au moyen d'un procédé pour transmettre à des abonnés à partir d'un serveur central branché sur un réseau de télécommunication des informations enregistrées sur des disques numériques lequel procédé comporte les opérations suivantes :
- on crée un serveur central comportant un ordinateur central, un magasin dans lequel on range une collection de disques numériques, chaque disque ayant une adresse déterminée qui est enregistrée dans la mémoire dudit ordinateur central, un ensemble de platines de lecture d'un disque numérique qui émettent des signaux analogiques et des signaux numériques et des moyens de transfert des disques un par un entre ledit magasin et lesdites platines de lecture, lesquels moyens de transfert sont commandés par un automate qui est relié audit ordinateur central ;
- on connecte ledit ordinateur central à un circuit d'interface de communication qui est connecté sur un réseau de télécommunication capable de transporter des informations numériques à grand débit ;
- on connecte audit réseau des postes d'abonnés comportant chacun un terminal télé-informatique capable de dialoguer avec ledit ordinateur central et des moyens pour transformer les informations numériques transmises par le réseau en signaux analogiques qui représentent des sons ou des images ou des écrits et on connecte chaque platine de lecture de disque numérique au dit circuit d'interface de communication de l'ordinateur avec le réseau de télécommunication par l'intermédiaire d'un filtre qui limite la bande passante du signal analogique, d'un convertisseur analogique à numérique, d'un circuit réducteur de débit et d'un multiplexeur et chaque poste d'abonné est connecté au réseau de télécommunication par une interface de communication, un circuit démultiplexeur, un circuit d'expansion de débit, un convertisseur numérique à analogique et un filtre montés en série.

Un dispositif selon l'invention comporte :
- un serveur central qui est relié à un réseau de télécommunication à grand débit capable de transporter des informations numériques et des postes d'abonnés qui sont reliés au dit réseau de télécommunication lequel centre serveur comporte un ordinateur central, un magasin dans lequel de très nombreux disques numériques sont rangés, chaque disque correspondant à l'enregistrement numérique d'un titre déterminé et ayant une adresse déterminée qui est enregistrée dans la mémoire du dit ordinateur central, une pluralité de platines de lecture des dits disques numériques, et des moyens de transfert automatique des disques un par un entre ledit magasin et lesdites platines de lecture, lesquels moyens de transfert sont commandés par un automate qui est lui même commandé par ledit ordinateur central et chaque platine de lecture est connectée à une interface de communication avec ledit réseau de télécommunication par un dispositif réducteur de débit qui comporte en série : un filtre analogique limiteur de bande passante, un convertisseur analogique à digital, un réducteur de débit des informations numériques et un multiplexeur et chaque poste d'abonné comporte un terminal télé-informatique capable de dialoguer avec l'ordinateur central, une interface de communication et une carte électronique qui comporte en série un démultiplexeur, un circuit d'expansion de débit, un convertisseur numérique à analogique, un filtre de reconstitution et des moyens transducteurs des signaux analogiques en sons, en images ou en écrits.

Selon un mode de réalisation préférentiel les moyens de transfert des disques un par un comportent des chariots automoteurs qui se déplacent sous ledit magasin de disques, un dispositif manipulateur qui place chaque disque sur une platine de lecture disponible et un convoyeur de transfert qui transporte les disques entre lesdits chariots et ledit dispositif manipulateur et inversement, lesquels chariots, le convoyeur et le dispositif manipulateur comportent des servo-moteurs qui sont commandés par ledit automate.

L'invention a pour résultat la possibilité pour des abonnés raccordés sur un réseau de télécommunication à grand débit de recevoir à domicile des informations stockées dans une collection étendue de disques numériques. Elle permet notamment de construire un serveur central constituant un kiosque à musique comportant une grande collection de disques compact audio et chaque abonné branché au réseau de télécommunication peut demander à ce serveur des programmes musicaux de son choix et recevoir ceux-ci à domicile avec une très bonne qualité musicale de type haute fidélité.

Dans ce cas, le résultat est la constitution de chaînes de distribution par les câbles d'un réseau de télécommunication de programmes musicaux personnalisés.

On peut également construire un serveur central comportant une collection de disques numériques dans lesquels on a enregistré une bibliothèque de documents écrits tels que des ouvrages littéraires ou de la documentation et dans ce cas des abonnés peuvent choisir dans un répertoire qui est affiché sur l'écran de leur terminal les documents qu'ils désirent consulter et ils peuvent lire ceux-ci sur un écran ou les imprimer.

Selon une autre application on peut constituer un serveur central comportant une collection de disques compact vidéo et permettre ainsi à des abonnés branchés sur un réseau de télécommunication à grand débit de recevoir sur l'écran d'un moniteur vidéo des émission vidéo personnalisées choisies dans un répertoire des disques disponibles.

On peut également construire un serveur central comportant une collection de disques numériques sur lesquels ont été stockés des logiciels de jeux par exemple ou destinés à tout autre application et dans ce cas des abonnés peuvent déclencher le téléchargement dans la mémoire du terminal téléinformatique ou d'un autre ordinateur, de logiciels qu'ils auront choisis dans le répertoire du serveur.

Dans ce cas le résultat est la constitution de vastes banques de logiciels accessibles par un réseau de télécommunication public ou privé, à un grand nombre d'utilisateurs.

La constitution de serveurs centraux comportant un magasin de disques numériques et un automate de type Juke-box commandé par un ordinateur relié au réseau de télécommunication permet de disposer d'une collection de documents très étendue car la capacité du magasin peut être très grande. Elle permet également de conserver la qualité de l'information obtenue grâce à la lecture optique des disques numériques, notamment la qualité de la musique et des sons dans le cas de disques audio.

La description suivante se réfère aux dessins annexés qui représentent sans aucun caractère limitatif un exemple de réalisation d'un dispositif selon l'invention.

La figure 1 est un schéma d'ensemble d'un dispositif selon l'invention.

La figure 2 est une coupe verticale suivant II II de la figure 1.

La figure 3 est une coupe verticale suivant III III de la figure 1.

La figure 4 est une vue de dessus d'un îlot de platines de lecture de disques numériques.

La figure 5 est une coupe verticale selon V V de l'îlot de la figure 4 sans la tourelle portant le bras manipulateur.

La figure 6 est une vue en élévation schématique de la tourelle pivotante.

La figure 7 est une vue de dessus de la tourelle pivotante.

La figure 8 est une vue en élévation partielle de la tourelle pivotante.

La figure 9 est une coupe verticale de la pince de préhension des disques portée par la tourelle pivotante.

La figure 10 est une coupe transversale de la figure 9 passant par la ligne X X.

Dans la suite de l'exposé on se réfèrera à un dispositif destiné à distribuer à distance des programmes musicaux ou sonores enregistrés sur des disques numériques à lecture laser. Il est précisé que ce choix n'est pas limitatif et que les disques numériques peuvent également contenir des logiciels, des images ou des documents écrits enregistrés sous forme numérique.

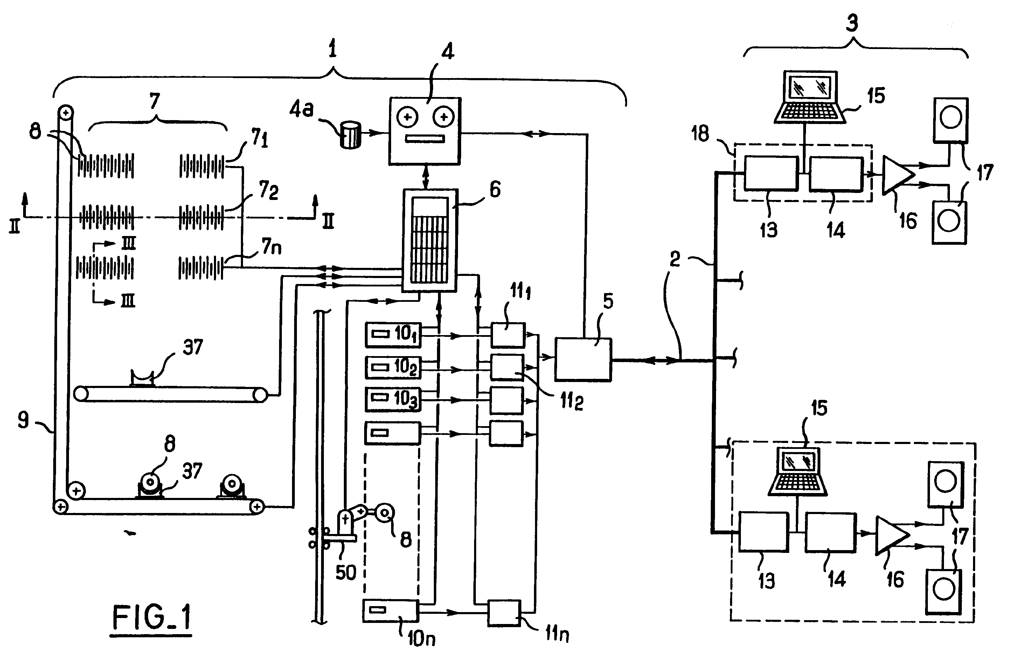

Le dispositif représenté sur la figure 1 comporte un centre serveur 1 qui est connecté sur un réseau de télécommunication 2 à grand débit capable de transporter des informations numériques à grande cadence, par exemple sur un réseau du type réseau numérique à intégration de services (RNIS) capable de transporter 64 Kbit/sec.

Le dispositif comporte en outre une pluralité de postes 3 de desserte des abonnés qui sont également branchés sur le réseau de télécommunication 1.

Le but recherché est de permettre à chaque abonné d'appeler un ou plusieurs programmes musicaux ou sonores choisi dans une liste d'un ensemble de disques disponibles au centre serveur, de recevoir la musique ou le son par le réseau et de la reproduire localement.

Par exemple, une salle publique de danse ou de concert branchée au réseau peut ainsi choisir une suite de morceaux de musique enregistrés dans la collection centrale et diffuser automatiquement ces morceaux de musique dans la salle comme si ceux-ci provenaient d'un lecteur automatique de disques installé dans la salle même.

Compte tenu de la qualité des sons obtenus par reproduction d'un enregistrement sur disque numérique, du débit du réseau de télécommunication, et de la possibilité de réaliser en temps réel des opérations très complexes de compression et d'expansion du signal, il est possible d'obtenir ainsi une reproduction musicale de bonne qualité.

Le centre serveur 1 comporte un automate programmable 6 commandé par un ordinateur 4 qui est connecté au réseau 2 par un circuit d'interface de communication 5.

L'ordinateur 4 comporte une mémoire périphérique 4a dans laquelle sont enregistrés les titres codés de chaque disque et les adresses de ceux-ci dans le magasin.

L'automate 6 reçoit de l'ordinateur des instructions d'exécution des cycles de fonctionnement des servo-moteurs équipant les divers postes de l'automate et il transmet des instructions aux divers servo-moteurs.

L'automate programmable 6 est l'élément de contrôle et de commande de l'ensemble des équipements électro-mécaniques du centre serveur.

Le centre serveur comporte un magasin de stockage d'un ensemble de disques numériques 8 disponibles. Ce magasin est divisé par exemple en plusieurs rangées parallèles (7₁, 7₂...7ₙ).

Les disques 8 sont rangés verticalement et coaxialement dans chaque rangée. Chaque disque portant l'enregistrement numérique d'un morceau de musique déterminé occupe une position déterminée dans une rangée déterminée qui constitue l'adresse du disque inscrite dans la banque de données 4a.

Les rangées de disques (7₁, 7₂...7ₙ) sont perpendiculaires à un convoyeur de transfert 9 qui est de préférence une chaîne sans fin du type à cardan c'est-à-dire une chaîne composée de maillons articulés entre eux autour de deux axes orthogonaux.

Les disques 8 sont des disques numériques de tout type connu par exemple des compact-disques à lecture par rayon laser.

Le centre serveur comporte une pluralité de lecteurs de disques (10₁, 10₂...10ₙ) qui sont adaptés à la nature des disques 8.

Il comporte un bras manipulateur 50 qui est commandé automatiquement par l'automate programmable 6. Le bras manipulateur 50 a pour fonction de saisir un par un les disques arrivant par le convoyeur 9 et de les placer sur un des lecteurs de disques 10₁. 10₂...10ₙ qui est disponible. Lorsque le disque est terminé il a pour fonction de le reprendre et de le replacer sur le convoyeur de transfert 9.

Chaque platine de lecture de disque 10₁, 10₂...10ₙ est connectée à un dispositif réducteur de débit 11₁, 11₂...11ₙ qui comporte en série un filtre analogique de filtrage limiteur de bande passante, un convertisseur analogique à numérique, un réducteur de débit, des signaux numériques et un multiplexeur dont la sortie est connectée à l'interface 5 de communication qui transmet les signaux numériques au réseau 2.

La figure 1 représente une pluralité de postes d'abonnés qui sont connectés au réseau 2. Chaque poste comporte un terminal téléinformatique 15 qui peut être par exemple un terminal téléinformatique courant de type grand public comportant un clavier alphanumérique, un écran vidéo et une interface de communication 13 adaptée au réseau de télécommunication 2.

Le terminal 15 permet à l'abonné d'entrer en liaison avec l'ordinateur 4 du centre serveur et d'indiquer à celui-ci, à partir du clavier, la liste des codes d'un ou plusieurs disques qu'il désire écouter ou recevoir.

Chaque poste d'abonné comporte en outre une carte électronique 18 qui comporte un module de démultiplexage, un module (13) d'expansion du débit des signaux numériques qui effectue l'opération inverse de celle qui a été réalisée par les réducteurs de débit contenus dans les circuits 11₁, 11₂...11ₙ, un convertisseur numérique à analogique (14) et un filtre de reconstitution.

Les circuits de la carte 18 et les circuits 11₁, 11₂...11ₙ sont par exemple ceux qui équipent un poste téléphonique à bande élargie ou encore les modules de prise et de restitution du son pour audioconférence, appareils destiné à être branché sur le réseau numérique à haut débit 2.
Dans le cas décrit où les abonnés désirent recevoir des programmes musicaux le poste de chaque abonné comporte en outre un ou plusieurs amplificateurs haute fidélité 16 et un ou plusieurs haut-parleurs logés dans des enceintes acoustiques 17 ou bien des écouteurs.

Bien entendu, si les disques 8 sont des disques vidéo, les haut-parleurs sont remplacés par des moniteurs vidéo.

Si les disques 8 contiennent de la documentation les amplificateurs 16 et les haut-parleurs sont remplacés par des imprimantes électroniques ou par un écran.

Si les disques 8 contiennent des logiciels, les signaux sont transférés sous leur forme numérique de la sortie numérique d'un lecteur 10₁, 10₂...10ₙ dans la mémoire du terminal téléinformatique 15 ou d'un autre ordinateur connecté à la carte de communication 13.

Dans tous les cas chaque poste d'abonné comporte des moyens transducteurs connus capables de convertir les signaux analogiques électriques sortant de la carte 18 soit en sons, soit en images soit en écrits selon la nature des informations enregistrées sur les disques numériques du centre serveur.

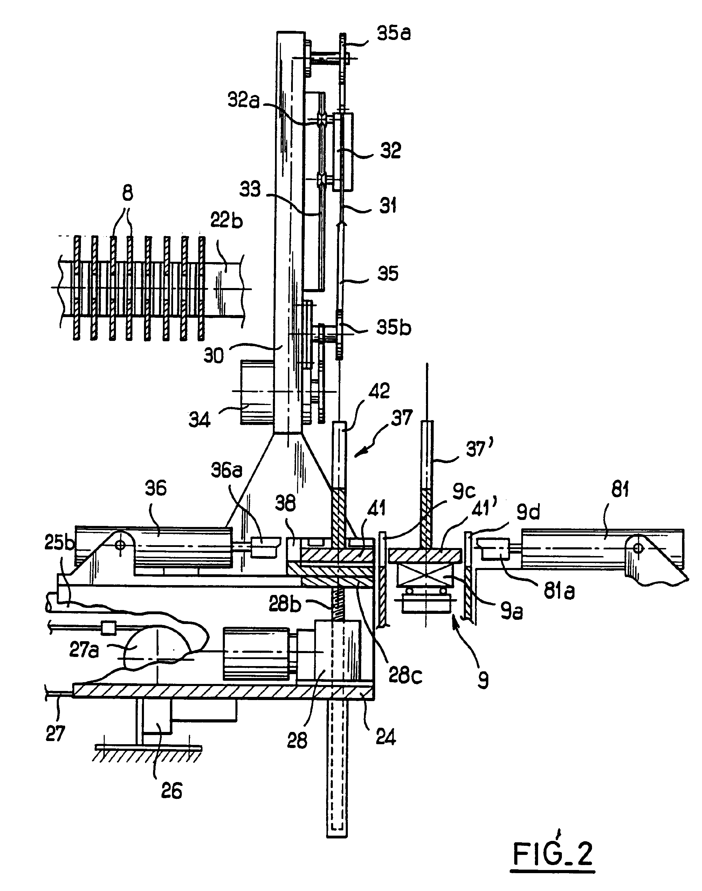

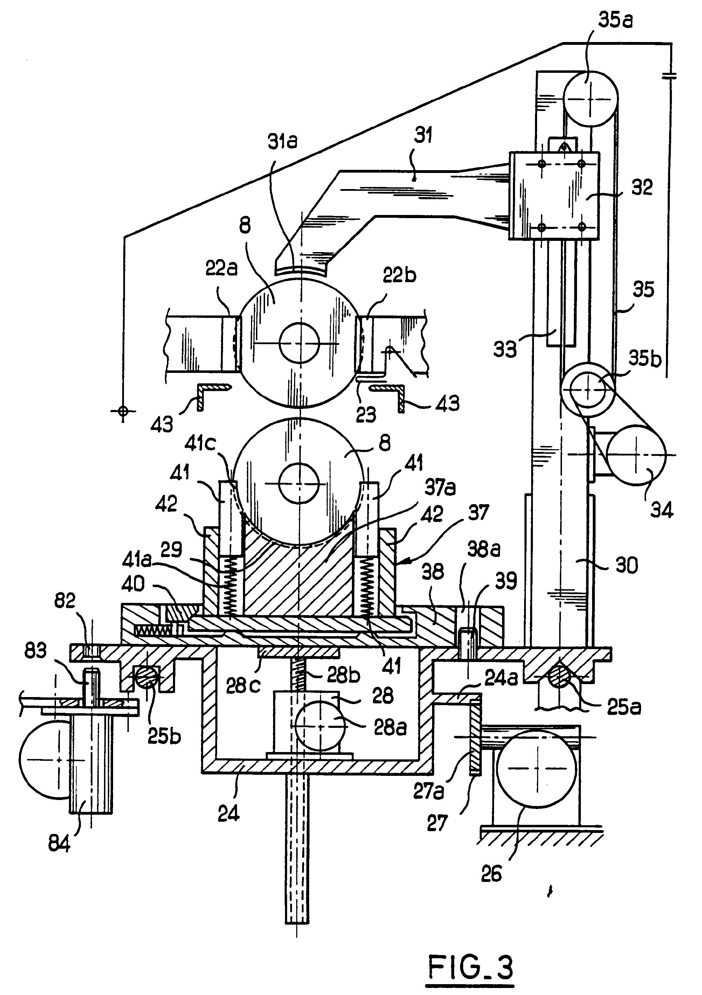

Les figures 2 et 3 sont des vues d'un mode de réalisation des moyens électro-mécaniques utilisés pour transférer les disques sélectionnés un par un du magasin au convoyeur et inversement.

La figure 2 est une coupe suivant II II de la figure 1 par un plan vertical perpendiculaire au convoyeur passant par l'axe d'une rangée de disques 7.

La figure 3 est une vue suivant III III de la figure 1 c'est-à-dire une coupe par un plan vertical perpendiculaire à une rangée du magasin de disques.

On voit sur les figures 2 et 3 des disques numériques 8 qui sont rangés verticalement entre deux support 22a et 22b qui comportent des rainures verticales qui forment des glissières, chaque disque étant logé dans une de ces glissières.

Chaque disque 8 est retenu par un doigt élastique escamotable 23 en forme d'épingle. La capacité d'un magasin est par exemple de 250 compact disques par mètre linéaire.

Chaque rangée du magasin comporte un chariot 24 de chargement et déchargement des disques qui se déplace sur deux rails horizontaux 25a et 25b situés au-dessous des disques et parallèles à l'axe de la rangée.

Chaque chariot 24 est entraîné en translation le long des rails par un moto-réducteur 26 qui entraîne une courroie crantée 27 montée sur une poulie d'entraînement 27a et sur une poulie de renvoi. La courroie crantée 27 visible sur la figure 2 est parallèle aux rails 25. Le châssis du chariot 24 comporte un doigt 24a qui est fixé au brin supérieur de la courroie crantée et qui suit les mouvements de celle-ci. La courroie crantée s'étend sur toute la longueur d'une rangée de disques.

Le chariot 24 porte un vérin à vis 28 commandé par un servo-moteur 28a.

La tige filetée 28b du vérin est verticale. Elle porte à son extrémité supérieure une platine 28c sur laquelle est fixé un socle 38 qui délimite une glissière parallèle aux rails 25a et 25b.

Le repère 40 représente une cale mobile poussée par un ressort 40a. Les cales 40 servent à positionner la semelle du support de disque dans le socle 38.

Le socle 38 est déplaçable verticalement par le vérin à vis 28.

Le socle 38 comporte des alésages 38a dans lesquels s'engagent des pions de centrage 39 solidaire du chariot 24.

Le socle 38 reçoit un support de disque 37 qui comporte une semelle 41 qui est posée sur le fond du socle 38 et qui peut coulisser perpendiculairement au convoyeur 9. Le support de disque comporte en outre un voile vertical 37a qui est parallèle aux disques, dont l'extrémité supérieure a la forme d'un arc de cercle de même diamètre que les disques et comporte une gorge 29 dans laquelle un disque 8 peut se loger comme on le voit sur la figure 2. Le support de disque comporte en outre deux montants latéraux fixes 42 qui servent de guidage à deux doigts verticaux 41 poussés par des ressorts 41a, lesquels doigts comportent sur leur face interne une gorge 41b en forme d'arc de cercle qui prolonge la gorge 29.

La figure 2 montre un disque 8 tenu en position verticale par le support de disque 37. On voit sur cette figure que la moitié inférieure du disque est engagée dans les gorges 41c et 29 qui forment un demi-cercle dont le rayon en fond de gorge est égal au rayon du disque.

Le chariot 24 porte, en outre, un montant vertical 30 qui porte un bras en potence 31 dont l'extrémité porte un secteur circulaire 31a muni d'une gorge. Le secteur 31a vient coiffer le disque choisi et le pousse vers le bas ce qui a pour effet de faire rétracter élastiquement le verrou escamotable 23 et de libérer le disque choisi. Le bras 31 est monté sur un chariot 32 qui est équipé de galets 32a qui roulent sur des rails de guidage verticaux 33 solidaires du montant 30.

Le chariot 32 est fixé à un des brins d'une courroie sans fin 35 passant sur une poulie de renvoi 35a et sur une poulie motrice 35b qui est entraînée par un servo-moteur 34 par l'intermédiaire d'une transmission à poulies et courroies sans fin.

La vitesse de déplacement vertical du chariot 32 et donc du secteur 31a est identique à celle du vérin à vis 28.

Les repères 43 désignent des butées fixes visibles sur la figure 3 contre lesquelles les doigts escamotables 41 viennent en butée lorsque le vérin à vis 28 soulève le support de disque 37.

La figure 2 représente un support de disque 37 monté sur le chariot 24 et un des brins 9a du convoyeur 9. On voit sur cette figure que le convoyeur 9 comporte une chaîne sans fin placée entre deux flasques verticaux 9c et 9d lesquels sont interrompus en face de chaque rangée du magasin de disques pour permettre le passage de la semelle 41 du support de disque.

On voit sur la figure 2 que le chariot 4 porte un vérin 36 dont la tête mobile 36a vient pousser la semelle 41 du support du disque se trouvant sur le chariot ce qui a pour effet de faire passer le support de disque sur le convoyeur 9a qui l'amène jusqu'au bras manipulateur 11 qui saisit le disque pour le placer sur l'une des platines de lecture 10₁, 10₂...10ₙ qui est libre.

On a également représenté sur la figure 2 un deuxième vérin 81 muni d'une tête 81a. L'installation comporte un vérin 81 pour chaque rangée du magasin de disques.
Les vérins 81 sont disposés du côté du convoyeur 9 opposé au côté où se trouvent les magasins de disques.

Lorsqu'un support de disque 37' portant un disque et venant d'une platine de lecture du disque arrive devant la rangée du magasin où le disque doit être rangé, la tête mobile 81a du vérin 81 repousse la semelle 41' du support de disque dans les glissières délimitées par le socle 38 porté par le chariot 24.

La figure 3 représente un vérin vertical 84 qui actionne une tige 83 qui pénètre dans un alésage 82 du chariot 24.

Lorsque le chariot 24 est arrivé à la position de déchargement ou de chargement sur le chariot du support de disque 37, le vérin 84 est actionné par l'automate 6 et le doigt 83 pénètre dans l'alésage 82 et immobilise le chariot pendant les opérations de chargement ou de déchargement.

Un cycle de transfert d'un disque 8 du magasin au convoyeur comporte les étapes suivantes :
- l'ordinateur central 4 qui connait l'adresse du disque choisi envoie celle-ci à l'automate 6. L'automate 6 libère le chariot 24 qui correspond à la rangée où se trouve le disque en rétractant le doigt 83. L 'automate 6 commande ensuite le servo-moteur 26 de la rangée du magasin dans laquelle se trouve le disque choisi. Il envoie à ce servo-moteur une valeur de consigne qui correspond à la position du disque dans la rangée. Le servo-moteur 26 déplace automatiquement le chariot 24 jusqu'à ce que la valeur de consigne soit atteinte.

Le support de disque 37 porté par le chariot ainsi que le secteur circulaire 31a se trouvent alors à la verticale du disque sélectionné. L'automate commande le vérin 28 qui soulève le support de disque jusqu'à ce que les doigts 41 viennent contre les butées 43.

Le vérin 28 est arrêté automatiquement avant que le support de disque 37 ne soit arrivé au contact du disque choisi.

L'automate commande le servo-moteur 34 qui fait descendre le bras 31 jusqu'à ce qu'il arrive au contact du disque 8. Après quoi l'automate commande la descente simultanée du bras 31 et du vérin 28. Le doigt escamotable 23 s'efface et le disque descend en étant tenu à la fois par le support de disque 37 et par le secteur circulaire 31a. Après quoi l'automate commande la remontée du chariot 32 portant le bras 31. Le disque est alors tenu par les deux doigts 41 qui sont remontés de chaque côté du disque sous l'effet des ressorts 41a.

Le vérin 28 est arrêté automatiquement lorsque le socle 38 arrive au contact du chariot 24.

Après quoi l'automate commande le servo-moteur 26 pour amener le chariot à une extrémité de la rangée ou se trouve le convoyeur 9. Il bloque ensuite le chariot en commandant le vérin 84 puis il commande le vérin 36 qui pousse le support de disque 37 portant un disque 8 sur le convoyeur 9 qui l'entraîne vers le bras manipulateur 11.

Lors d'un cycle de retour d'un disque dans le magasin, le vérin 81 pousse le support portant le disque sur le chariot et l'automate commande les mêmes opérations pour amener le chariot à la verticale du logement du disque. Lorsque le chariot est arrivé à la verticale, le vérin 28 soulève le support de disque et en remontant le disque repousse le doigt escamotable 23. Le bras en potence 31 n'est pas utilisé pendant les opérations de remise en place des disques dans le magasin.

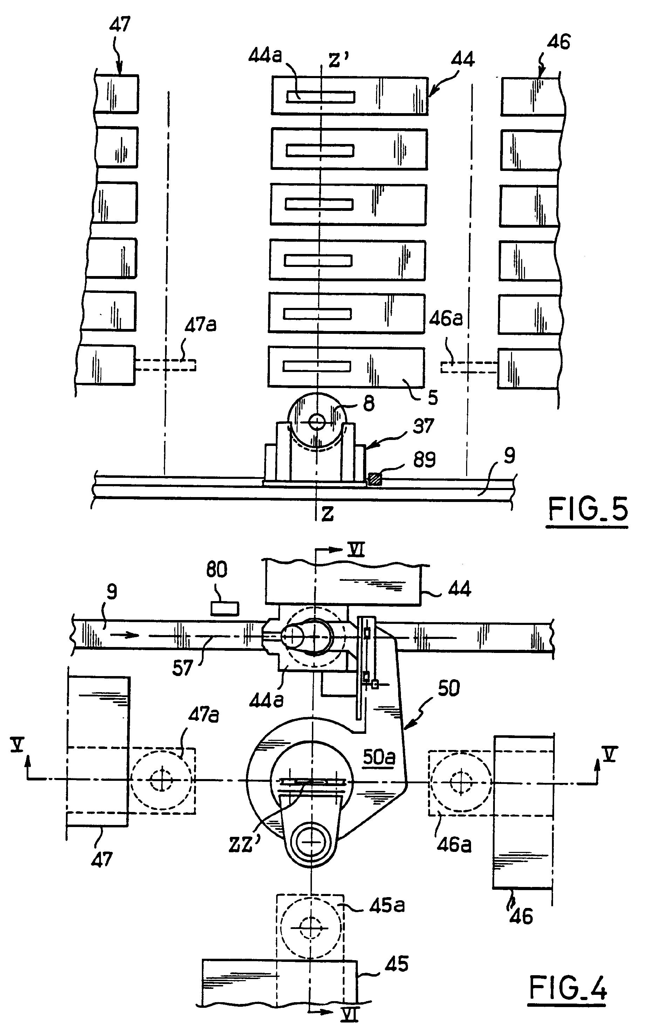

La figure 4 est une vue de dessus d'un dispositif manipulateur 50 desservant un îlot de platines de lecture de disques numériques qui comporte quatre colonnes de platines 44, 45, 46 et 47 disposées en croix autour d'un axe vertical zz'.

On a représenté en pointillés sur la figure 4 les tiroirs 44a, 45a, 46a, et 47a de réception d'un disque numérique en position sortie. On voit que les centres de ces tiroirs sont disposés symétriquement par rapport à l'axe zz'.

Le repère 9 représente le convoyeur de transfert qui transporte les supports de disques 37 portant chacun un disque 8 en position verticale.

La figure 5 est une vue en élévation d'un îlot de platines passant par l'axe zz' sans la tourelle de transfert des disques. On voit sur la figure 5 un support de disque 37 portant un disque 8 déplacé par le convoyeur de transfert 9.

Chaque support de disque 37 porte un code, par exemple un code barres. Le repère 80 représente un lecteur de ce code. Le lecteur de code 80 transmet le code à l'unité centrale qui a enregistré le code du support qui a pris en charge un disque déterminé.

La figure 4 représente schématiquement une tourelle 50 qui est située au centre d'un îlot de quatre colonnes de platines 44, 45, 46, 47 et qui a pour fonction de saisir le disque 8 qui arrive par le convoyeur 9, de l'amener à la verticale d'un des quatre axes verticaux passant par les centres des tiroirs 44a, 45a, 46a ,47a, de le faire pivoter à 90° pour le mettre en position horizontale et de le poser sur un tiroir disponible.

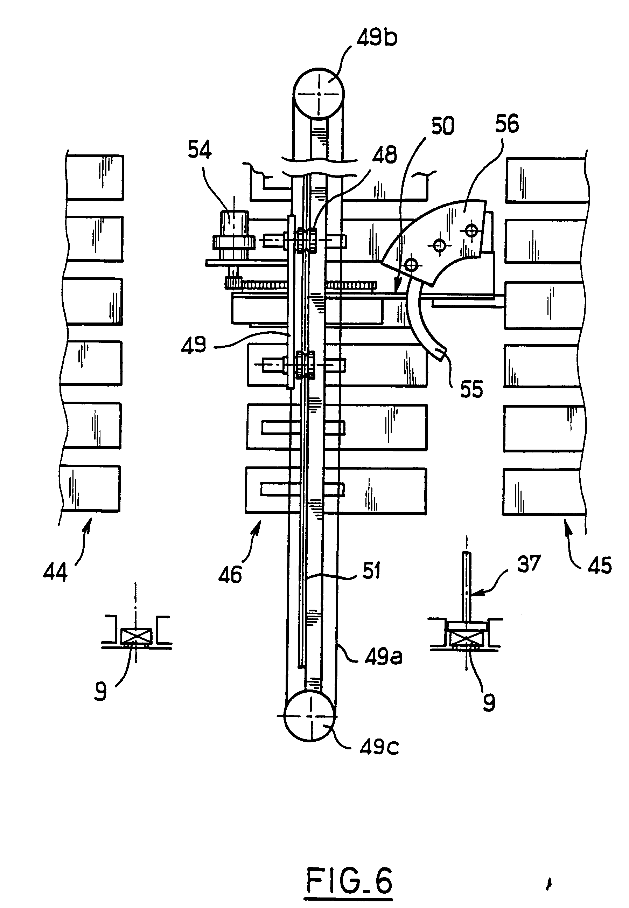

La figure 6 est une coupe selon VI VI de la figure 4.

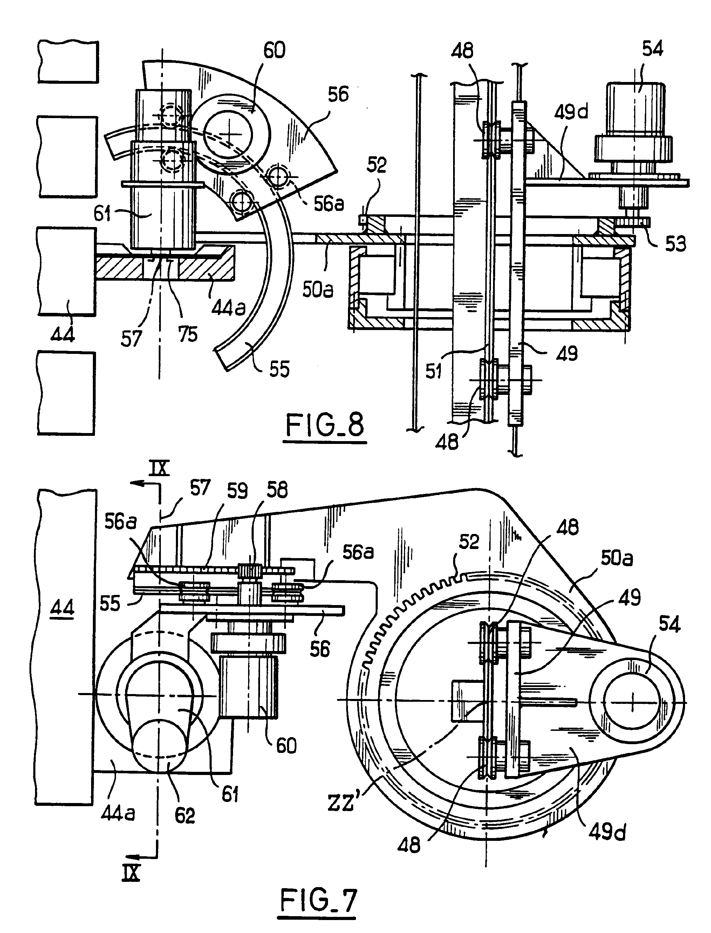

La figure 7 est une vue de dessus de la tourelle 50 desservant un îlot de platines.

La figure 8 est une vue en élévation de la figure 7.

Le repère 51 représente une lame de guidage verticale fixe qui contient l'axe zz' et qui est symétrique par rapport à celui-ci.

La tourelle comporte un chariot 49 qui est équipé de quatre galets 48 qui roulent le long des bords verticaux de la lame de guidage 51.

On voit sur la figure 6 que la lame de guidage 51 s'étend sur toute la hauteur des colonnes de platines de lecture 44, 45, 46, 47.

On voit également que le chariot 49 est fixé à ses deux extrémités supérieure et inférieure sur une courroie sans fin 49a qui passe sur deux poulies de renvoi 49b et 49c qui sont situées respectivement à l'extrémité supérieure et à l'extrémité inférieure d'un mât vertical. L'une des poulies est entraînée en rotation par un servo-moteur non représenté qui est commandé par l'automate 6 qui permet donc de déplacer verticalement le chariot 49 pour l'amener à la hauteur de l'une des platines de lecture disponible.

Le chariot 49 porte une platine horizontale 49d sur laquelle est monté un servo-moteur 54 qui est commandé par l'automate 6 et qui entraîne en rotation un pignon denté 53 qui engrène avec une couronne dentée 52. La couronne dentée 52 est centrée sur l'axe zz'. Elle est solidaire d'une plaque 50a comportant un évidement circulaire centré sur l'axe zz' à travers lequel sont engagés la lame de guidage 51 et le chariot 49.

La plaque 50a porte une lame fixe 55 en forme de secteur circulaire située dans un plan vertical qui s'étend de part et d'autre de la plaque 50a.

Les deux bords de la plaque sont taillés en biseau et servent de chemin de roulement à des galets à gorge 56a qui équipent un chariot 56 ayant la forme d'une portion de secteur circulaire.

Le chariot 56 porte un servo-moteur 60 qui entraîne un pignon denté 58 qui engrène avec une portion de couronne dentée fixe 59 qui est parallèle à la lame fixe 55.

La lame circulaire 55, la couronne dentée 59 et le chariot 56 sont centrés sur un axe horizontal 57. Le chariot 56 porte le mécanisme 61 d'actionnement de la pince à compact disque 75 actionné par un moto-réducteur 62.

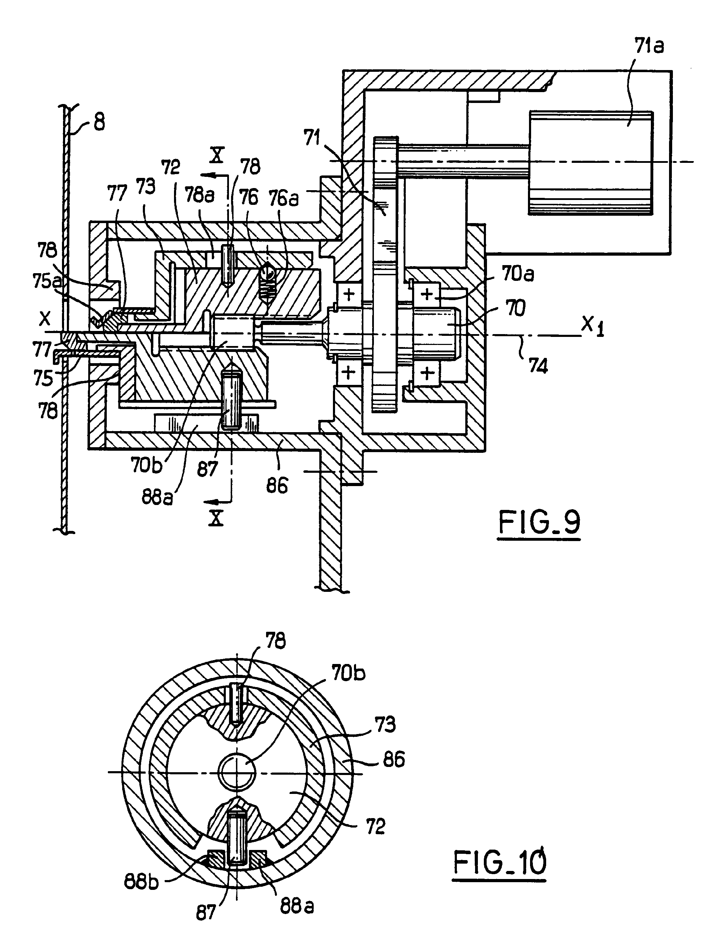

Ainsi le moto-réducteur 60 permet de déplacer le chariot 56 de 90° le long de la lame de guidage 55 pour amener la pince à disque de la position verticale représentée sur la figure 8 qui est la position dans laquelle elle pose un disque horizontalement sur un tiroir disponible 44a jusqu'à une position horizontale représentée sur la figure 9 qui est la position dans laquelle elle prend un disque placé en position verticale sur un support de disque 37 porté par le convoyeur.

La figure 9 est une coupe axiale de la pince à disques 75 et du mécanisme d'actionnement de celle-ci représentés en position horizontale et en train de prendre un disque 8 vertical.

La moitié supérieure de la figure 9 représente la pince à disque 75 en position rétractée. La moitié inférieure de la figure 9 représente la pince à disque 75 en position de préhension d'un disque 8.

Le mécanisme 61 comporte un arbre 70 d'axe xx₁ qui est supporté par des paliers 70a.

L'extrémité 70b de l'arbre porte un filetage mâle. L'arbre 70 est entraîné en rotation par un moto-réducteur 71a par l'intermédiaire d'une transmission à courroie 71.

Le mécanisme 61 comporte un équipage mobile en translation parallèlement à l'axe xx₁. Cet équipage mobile comporte un écrou 72 qui est vissé sur l'extrémité filetée 70b. L'écrou 72 porte un doigt anti-rotation 87 qui coulisse entre deux butées 88a et 88b fixées au carter 86. L'écrou 72 porte également un doigt 78 qui est engagé dans une fente allongée 78a pratiquée dans la pièce 73. Ce doigt permet un coulissement limité entre les pièces 72 et 73 suivant l'axe xx₁.

L'écrou 72 porte une butée à bille 76 poussée par un ressort 76a qui s'engage dans une encoche de la pièce 73. La pièce 73 porte à son extrémité avant des pinces 75 qui comportent à l'avant des crochets 75a articulés à la partie arrière. L'écrou 72 porte à son extrémité avant une pièce conique 77 contre laquelle les crochets 75a viennent en appui lorsqu'ils sont rétractés.

L'ensemble du mécanisme d'actionnement de la pince à disque est enfermé dans un carter circulaire 86.

Le cycle de fonctionnement de la pince pour saisir un disque 8 qui est présenté en position verticale est le suivant. L'axe 70 est d'abord placé de telle sorte que l'axe xx₁ soit aligné avec l'axe du disque.

Le servo-moteur 71a déplace ensuite l'écrou 72 qui avance en entraînant avec lui la pièce intermédiaire 73 jusqu'à ce que celle-ci arrive contre la butée 78 qui fait partie du carter 86 du mécanisme. A ce moment là les crochets 75a des pièces sont repliés et ils s'engagent dans l'orifice central du disque.

L'écrou 72 continue à avancer ce qui provoque l'escamotage de la butée à billes 76.

La pièce conique 77 provoque alors le pivotement et l'écartement des crochets 75a qui prennent la position représentée sur la moitié inférieure de la figure 9 assurant ainsi la préhension du disque.

Pour libérer un disque, le servo-moteur 71a entraîne l'écrou 72 et la pièce conique 77 vers l'arrière ce qui provoque d'abord le repliement des crochets 75a qui sont rappelés par des ressorts.

Lorsque l'écrou 72 continue à reculer, le doigt 78 entraîne la pièce intermédiaire 73.

La figure 10 est une coupe de la figure 9 selon X X sur laquelle on voit le carter circulaire 86, la pièce intermédiaire 73, l'écrou 72 la tête filetée 70b, le doigt anti-rotation 87, les deux butées 88a, 88b et le doigt 78. L'automate 6 et les installations électromécaniques qui viennent d'être décrites permettent d'amener un ou plusieurs disques numériques sélectionnés par un abonné sur des platines de lecture 10₁, 10₂...10ₙ qui font partie d'un ou plusieurs îlots desservis par une tourelle portant un bras manipulateur.

Revenant à la figure 1, on voit que chaque platine est reliée à l'interface 5 par un ensemble de circuits électroniques 11₁, 11₂...11ₙ dont le rôle est de comprimer les signaux analogiques disponibles à la sortie du lecteur de disque numérique pour les adapter au débit du réseau de télécommunication.

La haute qualité du son obtenu dans le cas de la lecture d'un disque compact audio résulte de la valeur élevée de la fréquence d'échantillonnage des signaux qui est de l'ordre de 44 KHz et de leur vaste échelle de quantification réalisée sur 16 bits.

Le débit d'informations utiles en stéréophonie est de l'ordre de 1.4 Mégabit/s ce qui dépasse la capacité du réseau de télécommunication 2.

La redondance matérielle des signaux vocaux et musicaux permet en fait de réduire le débit binaire au prix d'un traitement en temps réel plus ou moins complexe du signal.

Un mode de réalisation d'un tel système de compression de données consiste à utiliser le sous ensemble de codage d'un poste téléphonique à bande élargie ou d'un dispositif de prise de son pour audioconférence, sous ensemble dans lequel la méthode des codage généralement utilisée est dite en sous bande différentielle adaptative.

Chaque dispositif 11₁, 11₂...11ₙ comporte alors en série, un module de filtrage, un module de conversion analogique à numérique, un module de réduction de débit et un module de multiplexage.

Le module de filtrage comporte un filtre passe bas limitant la bande passant à environ 8 KHz ce spectre étant ensuite fractionné en 2 bandes de largeur égale. Le module de conversion analogique à numérique échantillonne chaque sous bande pour en préserver au mieux les caractéristiques par une fréquence d'échantillonnage, et une plage de quantification spécifique. Le module de compression comporte des algorithmes de réduction du nombre de bits par échantillon en tenant compte de la corrélation entre les échantillons consécutifs du signal. La sortie du réducteur de débit est connectée sur un module de multiplexage qui met en série les bits arrivant en parallèle.

Le repère 5 de la figure 1 représente un circuit d'interface qui est constitué d'un ensemble connu de cartes électroniques assurant la communication entre le serveur central et le réseau de télécommunication 2 qui peut être un réseau public ou un réseau privé.

L'automate 6 commande l'ensemble des équipements électromécaniques du serveur central d'une façon analogue à celle de l'automate équipant un "Juke-box". L'automate 6 commande les chariots desservant chaque rangée du magasin de stockage 7, le ou les convoyeurs de transfert 9, le bras manipulateur 11 qui assure le transfert des disques du convoyeur 9 vers les platines de lecture 10₁, 10₂...10ₙ et inversement, et les lecteurs de code placés le long du convoyeur pour lire les codes des supports de disques.

L'ordinateur 4 est l'organe central de gestion du serveur. Il gère le dialogue interactif avec les terminaux 3 qui l'appellent, il enregistre les demandes de ceux-ci, il transmet à l'automate les adresses des disques choisis et il supervise le fonctionnement de l'automate 6 grâce à un dialogue permanent avec celui-ci.

Les terminaux 3 permettent de consulter la banque de données des titres disponibles, d'en sélectionner certains et d'écouter la musique ou la voix transmise par ceux-ci.

Les terminaux 3 peuvent être de type domestique destinés par exemple à un particulier qui désire écouter chez lui un programme musical sans avoir à acheter ni disques ni lecteur de disques.

Dans ce cas, le terminal comporte un terminal télé-informatique grand-public comportant un écran vidéo et un clavier alphanumérique qui lui permet d'appeler l'ordinateur du centre serveur et d'indiquer la liste des disques choisis.

Le terminal comporte également un circuit d'interface de communication avec le réseau numérique 2, un module d'expansion qui peut être par exemple le module équipant un poste téléphonique à bande élargie qui comporte un circuit de démultiplexage, un module d'expansion de débit, un convertisseur numérique à analogique et un filtre de reconstitution.

De plus, chaque terminal comporte un amplificateur de type haute fidélité et des haut-parleurs ou des écouteurs.

Dans le cas d'un abonné qui désire recevoir de la musique ou des voix pour des représentations publiques par exemple dans une salle de concerts ou de danse, le terminal comporte des constituants qui remplissent les mêmes fonctions. Toutefois le dispositif expanseur de débit de même que le dispositif de compression de débit 11 ne sont plus alors des produits standards comme ceux qui sont utilisés pour la téléphonie de haute qualité.

On utilisera pour fournir un son de très bonne qualité un dispositif doté d'un traitement du signal très élaboré notamment, dans le cas d'un codage en sous bande, en augmentant la bande passante du signal, en augmentant le nombre de sous bandes, en mettant en oeuvre des dispositifs réducteurs de bruit, et ce tout en conservant un débit d'informations qui soit compatible avec le réseau de communication 2.

Le fonctionnement général d'un dispositif selon l'invention pour permettre à un poste d'abonné de recevoir des sons, des images ou des écrits sélectionnés dans un répertoire de disques numériques comporte deux phases.

La première phase est un dialogue interactif entre le terminal informatique 15 du poste d'abonné et l'ordinateur central 4.

L'abonné appelle l'ordinateur central par le réseau 2. Lorsque la liaison est établie l'abonné peut recevoir sur l'écran du terminal le menu disponible c'est-à-dire le répertoire de tous les titres entre lesquels il peut choisir par exemple dans le cas de disques de musique le répertoire de toutes les oeuvres musicales disponibles au serveur central.

L'abonné compose le programme qu'il désire recevoir en sélectionnant par une touche de fonction du clavier les titres qui sont pointés successivement par un curseur sur l'écran.

La deuxième phase est une phase d'exécution automatique du programme sélectionné par l'abonné.

L'ordinateur central vérifie si le premier titre de la selection est disponible en magasin. S'il est disponible l'ordinateur envoie à l'automate l'adresse du disque c'est-à-dire le numéro de la rangée où se trouve le disque et la position du disque dans la rangée ainsi que l'adresse d'un lecteur de disque disponible. L'automate déclenche alors un cycle d'opérations de transfert du disque et de lecture de celui-ci. L'automate enregistre la lecture du code d'un support de disque vide qui passe devant le lecteur de code.

Il commande le transfert de ce support jusqu'au magasin de stockage. Lorsque le support passe en face de la rangée du magasin où se trouve le disque sélectionné l'automate commande le vérin 81 situé en face de cette rangée ce qui a pour effet de transférer le support de disques sur le chariot automoteur 24 qui était bloqué par le doigt 83. L'automate 6 commande ensuite le retrait du doigt 83 ce qui libère le chariot 24. L'automate envoie au servo-moteur 26 du chariot la coordonnée du disque choisi et le chariot se rend automatiquement à cette coordonnée. L'automate commande alors la montée du vérin 28 puis la descente du bras en potence 31 suivi de la descente simultanée du vérin 28 puis le retour du chariot automoteur 24 en tête de la rangée du magasin puis le blocage du chariot par le doigt 83 puis le déplacement du vérin 36 qui éjecte le support de disque portant le disque choisi sur le convoyeur lequel le transfère vers l'îlot de platines de lecture du disque où il est arrêté par une butée escamotable 89 visible sur la figure 5 tandis que le convoyeur continue à avancer. La butée 89 est commandée automatiquement par un lecteur de code 80 qui lit le code du support de disque.

L'automate commande alors le dispositif de manutention 50 qui dessert l'îlot lequel saisit le disque en position verticale le fait pivoter en position horizontale et le dépose sur le tiroir de la platine disponible.

Après quoi, l'automate commande l'évacuation du dispositif de manutention, la fermeture du tiroir et la lecture du disque ou de la plage du disque comportant le titre choisi par l'abonné.

Dans le cas d'un enregistrement musical, la platine de lecture est une platine laser qui lit les informations numériques et transforme celles-ci en signaux électriques analogiques. Ces signaux analogiques sont filtrés, convertis à nouveau en signaux numériques qui sont ensuite traités pour réduire le débit de signaux à transmettre puis envoyés sur le réseau de télécommunication à haut débit.

Avant que le cycle de lecture de la plage choisie sur le disque numérique n°1 ne soit terminé, l'automate exécute le cycle de transfert du disque comportant l'oeuvre musicale n°2 demandée par l'abonné sur une deuxième platine de lecture disponible de sorte que la transmission à l'abonné de la deuxième oeuvre musicale demandée peut suivre sans interruption ou avec une brève interruption la transmission de la première oeuvre et ainsi de suite.

A la fin de la lecture de chaque disque l'automate commande un cycle de retour du disque vers le magasin où le disque est stocké toujours à la même adresse.

On connait des disquettes numériques montées dans des cassettes et des lecteurs de telles disquettes. Il est précisé que le serveur central peut comporter un magasin de disquettes montées sur cassettes, des lecteurs de telles disquettes et un dispositif manipulateur 50 adapté à placer ces disquettes en cassettes sur les lecteurs appropriés à la lecture de celles-ci.

## Revendications

1. Procédé pour transmettre à des abonnés à partir d'un serveur central branché sur un réseau de télécommunication des informations enregistrées sur des disques numériques caractérisé par la suite d'opérations suivantes :
- on crée un serveur central comportant un ordinateur central (4), un magasin (7) dans lequel on range une collection de disques numériques (8), chaque disque ayant une adresse déterminée qui est enregistrée dans la mémoire dudit ordinateur central (4), un ensemble de platines (10₁, 10₂...10ₙ) de lecture d'un disque numérique qui émettent séparément des signaux analogiques et des signaux numériques et des moyens de transfert des disques un par un entre ledit magasin et lesdites platines de lecture, lesquels moyens de transfert sont commandés par un automate (6) qui est relié audit ordinateur central (4);
- on connecte ledit ordinateur central à un circuit d'interface de communication (5) qui est connecté sur un réseau de télécommunication (2) capable de transporter des informations numériques à grand débit ;
- on connecte audit réseau (2) des postes d'abonnés (3) comportant chacun un terminal télé-informatique (15) capable de dialoguer avec ledit ordinateur central et des moyens pour transformer les informations numériques transmises par le réseau en signaux analogiques qui représentent des sons ou des images ou des écrits et on connecte chaque platine (10₁, 10₂...10ₙ) de lecture de disque numérique au dit circuit d'interface (5) avec le réseau de télécommunication par l'intermédiaire d'un filtre qui limite la bande passante du signal analogique, d'un convertisseur analogique à numérique, d'un circuit réducteur de débit et d'un multiplexeur et chaque poste d'abonné est connecté au réseau de télécommunication par un circuit d'interface de communication, un circuit démultiplexeur, un circuit d'expansion de débit, un convertisseur numérique à analogique et un filtre de reconstitution montés en série.

2. Dispositif pour transmettre à des abonnés à partir d'un serveur central branché sur un réseau de télécommunication des informations enregistrées sur des disques numériques notamment des sons, des images, des écrits ou des logiciels choisis par chaque abonné dans un répertoire de titres enregistrés dans une collection de disques numériques caractérisé en ce qu'il comporte :
- un serveur central (1) qui est relié à un réseau de télécommunication (2) à grand débit capable de transporter des informations numériques et des postes d'abonnés (3) qui sont reliés au dit réseau de télécommunication (2) lequel centre serveur comporte un ordinateur central (4), un magasin (7) dans lequel de très nombreux disques numériques (8) sont rangés, chaque disque correspondant à l'enregistrement numérique d'un titre déterminé et ayant une adresse déterminée qui est enregistrée dans la mémoire du dit ordinateur central, une pluralité de platines (10₁, 10₂...10ₙ) de lecture des dits disques numériques (8), et des moyens de transfert automatique des disques un par un entre ledit magasin (7) et lesdites platines de lecture (10₁, 10₂...10ₙ), lesquels moyens de transfert sont commandés par un automate (6) qui est lui même commandé par ledit ordinateur central et chaque platine de lecture (10₁, 10₂...10ₙ) est connectée à une interface (5) de communication avec ledit réseau de télécommunication par un dispositif réducteur de débit (11₁, 11₂...11ₙ) qui comporte en série : un filtre analogique limiteur de bande passante, un convertisseur analogique à digital, un réducteur de débit des informations numériques et un multiplexeur et chaque poste d'abonné comporte un terminal télé-informatique (15) capable de dialoguer avec l'ordinateur central, une interface de communication et une carte électronique (18) qui comporte en série un démultiplexeur, un circuit d'expansion de débit, un convertisseur numérique à analogique et un filtre de reconstitution et des moyens (16, 17) transducteurs des signaux analogiques en sons, en images ou en écrits.

3. Dispositif selon la revendication 2 caractérisé en ce que lesdits moyens de transfert des disques un par un comportent des chariots automoteurs (24) qui se déplacent sous ledit magasin de disques (7), un dispositif manipulateur (50), qui place chaque disque sur une platine de lecture (10₁, 10₂...10ₙ) disponible et un convoyeur de transfert (9) qui transporte les disques entre lesdits chariots (24) et ledit dispositif manipulateur (50) et inversement, lesquels chariots, le convoyeur et le dispositif manipulateur comportent des servo-moteurs qui sont commandés par ledit automate (6).

4. Dispositif selon la revendication 3 caractérisé en ce que ledit magasin (7) comporte plusieurs rangées parallèles entre elles (7₁, 7₂...7ₙ) et perpendiculaire audit convoyeur de transfert (9) dans chacune desquelles une pluralité de disques numériques sont rangés verticalement et il comporte en outre, sous chaque rangée, un chariot automoteur (24) qui est déplacé en translation par un servomoteur (26) sur une paire de rails (25a, 25b) situés au-dessous de ladite rangée et parallèles à celle-ci.

5. Dispositif selon la revendication 4 caractérisé en ce que chaque chariot automoteur (24) porte un vérin à vis vertical (28) qui supporte un socle (38) qui délimite une glissière perpendiculaire audit convoyeur de transfert (9) lequel socle peut recevoir temporairement un support de disque (37) et chaque chariot automoteur porte en outre un vérin horizontal (36) destiné à faire glisser ledit support de disque (37) dans ladite glissière et à l'engager sur ledit convoyeur de transfert (9).

6. Dispositif selon la revendication 5 caractérisé en ce que chaque chariot automoteur (24) porte, en outre un montant vertical (30) supportant un chariot (32) déplaçable verticalement par un servo-moteur (34), lequel chariot porte un bras (31) en forme de potence qui porte à son extrémité un secteur circulaire (31a) ayant un rayon égal à celui desdits disques (8) lequel secteur circulaire prend appui sur le dessus du disque sélectionné pour pousser celui-ci vers le bas ce qui a pour effet d'escamoter une épingle élastique (23) qui maintenait le disque en place.

7. Dispositif selon l'une quelconque des revendications 5 et 6 caractérisé en ce que chaque support de disque (37) comporte une semelle horizontale (41) qui est appuyée sur le fond dudit socle (38), une plaque verticale (37a) parallèle au plan des disques dont l'extrémité supérieure a la forme d'un arc de cercle de même rayon que les disques et comporte une gorge (29) dans laquelle s'engage le disque sélectionné et comporte en outre deux doigts coulissants (41) dont les faces internes comportent une gorge (41c) en forme d'arc de cercle, lesquels doigts sont repoussés vers le haut par des ressorts (41a).

8. Dispositif selon la revendication 3 caractérisé en ce que ledit dispositif manipulateur (50) comporte un chariot automoteur (49) muni de galets (48) qui est déplacé verticalement le long d'une lame de guidage symétrique par rapport à un axe vertical (zz') autour duquel sont disposées des colonnes (44, 45, 46, 47) de platines de lecture de disques numériques.

9. Dispositif selon la revendication 8 caractérisé en ce que ledit chariot automoteur (49) porte un servo-moteur (54) qui entraîne en rotation une couronne dentée (52) qui est solidaire d'une plaque horizontale (50a) et qui entoure une ouverture circulaire découpée dans ladite plaque et centrée sur ledit axe vertical (zz') à travers laquelle ladite lame de guidage (51) et ledit chariot automoteur (49) sont engagés.

10. Dispositif selon la revendication 8 caractérisé en ce que ladite plaque horizontale (50a) supporte une lame de guidage (55) en forme d'arc de cercle située dans un plan vertical et un chariot automoteur (56) qui est déplacé le long de ladite lame circulaire par un servo-moteur (60) lequel chariot porte une pince à disques (75) et un mécanisme (61) d'actionnement de celle-ci.

11. Dispositif selon la revendication 10 caractérisé en ce que ladite pince à disques comporte plusieurs doigts (75) ayant une extrémité (75a) articulée et ledit mécanisme d'actionnement comporte un arbre (70) qui est entraîné en rotation par un servo-moteur (71a) et qui a une extrémité filetée (70b) et il comporte en outre un écrou (72) qui est vissé sur ladite extrémité filetée (70b) et qui est bloqué en rotation par un doigt (87), lequel écrou pousse une pièce conique (77) qui provoque l'ouverture des dits doigts articulés (75a).

## Claims

1. Method of transmitting information recorded on digital disks from a central server to subscribers via a telecommunications network, characterized by the following sequence of operations:
- a central server is set up comprising a central computer (4), a magazine (7) in which a collection of digital disks (8) is placed, each disk having a determined address which is stored in the memory of said central computer (4), a set of digital disk players (10₁, 10₂...10ₙ) which deliver separate analog signals and digital signals, and transfer means for transferring disks one by one between said magazine and said players, said transfer means being controlled by a controller (6) connected to said central computer (4);
- said central computer is connected to a communication interface circuit (5) which is connected to a telecommunications network (2) capable of conveying digital data at a high rate;
- subscriber stations (3) are connected to said network (2), each subscriber station including a remote computing terminal (15) capable of dialoguing with said central computer and means for transforming digital data transmitted by the network into analog signals representing sounds or images or writings, and each digital disk player (10₁, 10₂ ...10ₙ) is connected to said interface circuit (5) with the telecommunications network via a filter which limits the passband of the analog signal, an analog to digital converter, a data rate reducing circuit, and a multiplexer, and each subscriber station is connected to the telecommunications network via a communications interface circuit, a demultiplexer circuit, a data rate expander circuit, a digital to analog converter, and a playback filter all connected in series.

2. Apparatus for transmitting information recorded on digital disks from a central server to subscribers via a telecommunications network, the information comprising, in particular, sounds, images, writing, or software selected by each suscriber from a directory of titles available in a collection of digital disks, characterized in that it comprises:
- a central server (1) which is connected to a high data rate telecommunications network (2) capable of conveying digital information, and subscriber stations (3) connected to said telecommunications network (2), said central server including a central computer (4), a magazine (7) containing a very large number of digital disks (8) with each disk corresponding to a digital recording of a determined title and having a determined address which is stored in the memory of said central computer, a plurality of players (10₁, 10₂...10ₙ) for said digital disks (8), and transfer means for automatically transferring disks one by one between said magazine (7) and said players (10₁, 10₂...10ₙ), which transfer means are controlled by a controller (6) which is itself controlled by said central computer; each player (10₁, 10₂...10ₙ) being connected to a communications interface (5) with said telecommunications network via a data rate reducing circuit (11₁, 11₂, ...11ₙ) comprising in series: a passband limiting analog filter, an analog to digital converter, a digital data rate reducing circuit, and a multiplexer, while each subscriber station includes a remote computing terminal (15) capable of dialoguing with the central computer, a communications interface and an electronic card (18) including in series: a demultiplexer, a data rate expansion circuit, a digital to analog converter, a playback filter, and transducer means (16, 17) for converting analog signals into sounds, images, or writing.

3. Apparatus according to claim 2, characterized in that said transfer means for transferring disks one by one comprise self-propelled carriages (24) which move beneath said disk magazine (7), a disk handling device (50) for placing each disk on an available player (10₁, 10₂...10ₙ), and a transfer conveyor (9) which conveys disks between said carriages (24) and said disk handling device (50) and vice versa which carriages, conveyor, and disk handling device include servomotors controlled by said controller (6).

4. Apparatus according to claim 3, characterized in that said magazine (7) comprises a plurality of mutually parallel rows (7₁, 7₂...7ₙ) perpendicular to said transfer conveyor (9), each row containing a plurality of digital disks disposed vertically, the magazine further comprising a self-propelled carriage (24) beneath each row which carriage is displaced in translation by a servomotor (26) along a pair of rails (25a, 25b) situated beneath said row and extending parallel thereto.

5. Apparatus according to claim 4, characterized in that each self-propelled carriage (24) carries a vertical screw actuator (28) supporting a base (38) which delimits a slideway perpendicular to said transfer conveyor (9), said base being capable of temporarily receiving a disk support (37) , and each self-propelled carriage also carrying a horizontal actuator (36) for causing said disk support (37) to slide in said slideway and for engaging it on said transfer conveyor (9).

6. Apparatus according to claim 5, characterized in that each self-propelled carriage (24) further carries a vertical upright (30) suporting a carriage (32) which is vertically displaceable by a servomotor (34), said carriage carrying a bracket-forming arm (31) which carries a circular sector (31a) at its end, the radius of the circular sector being equal to the radius of said disks (8), said circular sector bearing against the top of a selected disk in order to push it downwards, thereby causing a resilient pin (23) holding the disk in place to retract.

7. Apparatus according to any one of claims 5 and 6, characterized in that each disk support (37) includes a horizontal foot (41) bearing against the bottom of said base (38), a vertical plate (37a) parallel to the plane of the disks and having a top end in the form of a circular arc having the same radius as the disks and including a groove (29) in which the selected disk is engaged, and further including two sliding fingers (41) whose inside faces include respective circularly arcuate grooves (41c), said fingers being urged upwards by springs (41a).

8. Apparatus according to claim 3, characterized in that said disk handling device (50) includes a self-propelled carriage (49) provided with wheels (48) and capable of moving vertically along a guide plate disposed symmetrically about a vertical axis (zz') with columns (44, 45, 46, 47) of digital disk players being disposed there around the vertical axis.

9. Apparatus according to claim 8, characterized in that said self-propelled carriage (49) carries a servomotor (54) which rotates a toothed ring (52) which is fixed to a horizontal plate (50a) and which surrounds a circular opening cut out in said plate and centered on said vertical axis (zz') with said guide plate (51) and said self-propelled carriage (49) being engaged through said circular opening.

10. Apparatus according to claim 8, characterized in that said horizontal plate (50a) supports a guide plate (55) in the form of a circular arc situated in a vertical plane, together with a self-propelled carriage (56) which is displaced along said circular plate by a servomotor (60) which carriage carries a disk clamp (75) and an actuator mechanism (61) therefor.

11. Apparatus according to claim 10, characterized in that said disk clamp carries a plurality of fingers (75) having a hinged end (75a), said actuator mechanism including a shaft (70) which is rotated by a servomotor (71a) and which has a threaded end (70b) further comprises a nut (72) screwed on said threaded end (70b) and prevented from rotating by a finger (87), which nut drives a conical part (77) which causes said hinged fingers to open (75a).

## Patentansprüche

1. Verfahren zur Übertragung von auf digitalen Platten gespeicherten Daten von einem an ein Telekommunikationsnetz angeschlossenen zentralen Datenanbieter an Teilnehmer, gekennzeichnet durch die Abfolge der folgenden Schritte:
- es wird ein zentraler Datenanbieter geschaffen, bestehend aus einem Zentralrechner (4), einem Fach (7), in dem eine Reihe digitaler Platten (8) angeordnet sind, wobei jede Platte eine bestimmte Adresse hat, die in dem Speicher des genannten Zentralrechners (4) gespeichert ist, einer Gruppe von Laufwerken (10₁, 10₂ ...10ₙ) zum Lesen einer digitalen Platte, die getrennt analoge Signale und digitale Signale abgeben, und Mitteln zum Transport der einzelnen Platten zwischen dem genannten Fach und den genannten Leselaufwerken, wobei die Transportmittel von einem Automaten (6) betätigt werden, der an den genannten Zentralrechner (4) angeschlossen ist;
- der genannte Zentralrechner wird mit einem Anschlußschnittstellenschaltkreis (5) verbunden, der an ein Telekommunikationsnetz (2) angeschlossen ist, das digitale Daten mit hoher Geschwindigkeit übertragen kann;
- es werden Teilnehmereinheiten (3) an das genannte Netz (2) angeschlossen, die jeweils aus einem Datenfernübertragungs-Terminal (15), der geeignet ist, mit dem genannten Zentralrechner in Dialog zu treten, und aus Mitteln zur Umwandlung der über das Netz übertragenen numerischen Daten in analoge Signale, die Töne oder Bilder oder Geschriebenes darstellen, bestehen, und jedes Laufwerk (10₁, 10₂ ...10ₙ) zum Lesen von digitalen Platten wird über einen Filter, der die Bandbreite des Analogsignals begrenzt, einen Analog-Digital-Umwandler, eine Schaltung zur Verminderung der Datengeschwindigkeit und einen Multiplexer an den genannten Schnittstellenschaltkreis (5) mit dem Telekommunikationsnetz angeschlossen, und jede Teilnehmereinheit wird über eine Verbindungsschnittstelle, eine Demultiplexerschaltung, eine Schaltung zur Erhöhung der Datengeschwindigkeit, einen Digital-Analog-Umwandler und einen Filter zur Wiederherstellung, die in Reihe geschaltet sind, an das Telekommunikationsnetz angeschlossen.

2. Vorrichtung zur Übertragung von auf digitalen Platten gespeicherten Daten, insbesondere von Tönen, Bildern, Geschriebenem oder von Programmen, die vom Teilnehmer aus einem Angebot von auf einer Reihe digitaler Platten gespeicherten Titeln ausgewählt werden, von einem an ein Telekommunikationsnetz angeschlossenen zentralen Datenanbieter an Teilnehmer,
dadurch gekennzeichnet, daß sie aus einem zentralen Datenanbieter (1), der an ein Hochgeschwindigkeits-Telekommunikationsnetz (2) zur Übertragung numerischer Daten angeschlossen ist, und Teilnehmereinheiten (3), die an das genannte Telekommunikationsnetz (2) angeschlossen sind, besteht, wobei dieser Datenanbieter einen Zentralrechner (4), ein Fach (7), in dem sehr viele digitale Platten (8) angeordnet sind, wobei jede Platte der digitalen Aufzeichnung eines bestimmten Titels entspricht und eine bestimmte Adresse hat, die in dem Speicher des genannten Zentralrechners gespeichert ist, mehrere Laufwerke (10₁, 10₂ ... 10ₙ) zum Lesen der genannten digitalen Platten (8) sowie Mittel zum automatischen Transport der einzelnen Platten zwischen dem genannten Fach (7) und den genannten Leselaufwerken (10₁, 10₂ ... 10ₙ) aufweist, wobei die Transportmittel von einem Automaten (6) betätigt werden, der seinerseits von dem genannten Zentralrechner gesteuert wird, und wobei jedes Leselaufwerk (10₁, 10₂ ... 10ₙ) mit einer Schnittstelle (5) zur Verbindung mit dem genannten Telekommunikationsnetz über eine Vorrichtung zur Verringerung der Datengeschwindigkeit (11₁, 11₂ ... 11ₙ) verbunden ist, die in Reihe geschaltet aufweist: einen Analogfilter zur Begrenzung der Bandbreite, einen Analog-Digital-Umwandler, eine Schaltung zur Verminderung der Geschwindigkeit der numerischen Daten und einen Multiplexer, und wobei jede Teilnehmereinheit einen Datenfernübertragungs-Terminal (15), der geeignet ist, mit dem Zentralrechner in Dialog zu treten, eine Verbindungsschnittstelle und eine elektronische Karte (18) aufweist, die in Reihe geschaltet einen Demultiplexer, eine Schaltung zur Erhöhung der Datengeschwindigkeit, einen Digital-Analog-Umwandler und einen Filter zur Wiederherstellung und Mittel (16, 17) zum Umwandeln von Analogsignalen in Töne, in Bilder oder in Geschriebenes enthält.

3. Vorrichtung nach Anspruch 2,
dadurch gekennzeichnet, daß die genannten Mittel zum Transport der einzelnen Platten aus selbstfahrenden Wagen (24), die sich unter dem genannten Plattenfach (7) verfahren, einer Manipulatorvorrichtung (50), die jede Platte in ein verfügbares Leselaufwerk (10₁, 10₂ ... 10ₙ) einlegt, und einem Transportförderer (9), der die Platten zwischen den genannten selbstfahrenden Wagen (24) und der genannten Manipulatorvorrichtung (50) hin- und hertransportiert, bestehen, wobei die genannten Wagen, der Förderer und die Manipulatorvorrichtung Servomotoren besitzen, die von dem genannten Automaten (6) gesteuert werden.

4. Vorrichtung nach Anspruch 3,
dadurch gekennzeichnet, daß das genannte Fach (7) aus mehreren zueinander parallelen Reihen (7₁, 7₂ ... 7ₙ) besteht, die senkrecht zum genannten Transportförderer (9) angeordnet sind und in denen jeweils mehrere digitale Platten senkrecht angeordnet sind, und des weiteren unter jeder Reihe einen selbstfahrenden Wagen (24) aufweist, der auf einem Paar von Schienen (25a, 25b), die sich unterhalb der genannten Reihe und parallel zu dieser befinden, von einem Servomotor (26) in einer Vorschubbewegung verfahren wird.

5. Vorrichtung nach Anspruch 4,
dadurch gekennzeichnet, daß jeder selbstfahrende Wagen (24) eine senkrechte Schraubenwinde (28) aufweist, auf der ein Sockel (38) ruht, der eine senkrecht zu dem genannten Transportförderer (9) angeordnete Gleitschiene begrenzt, wobei der genannte Sockel vorübergehend einen Plattenträger (37) aufnehmen kann, und daß jeder selbstfahrende Wagen des weiteren einen waagrechten Zylinder (36) trägt, der dazu bestimmt ist, den genannten Plattenträger (37) in der genannten Gleitschiene gleiten zu lassen und ihn auf dem genannten Transportförderer (9) in Eingriff zu bringen.

6. Vorrichtung nach Anspruch 4,
dadurch gekennzeichnet, daß jeder selbstfahrende Wagen (24) weiterhin einen senkrechten Ständer (30) aufweist, der einen mit einem Servomotor (34) senkrecht verfahrbaren Wagen (32) abstützt, der einen Arm (31) in Form eines Auslegers hält, der an seinem Ende einen kreisförmigen Sektor (31a) mit einem Radius aufweist, der gleich groß ist wie derjenige der genannten Platten (8), wobei dieser kreisförmige Sektor auf der ausgewählten Platte in Anlage kommt, um diese nach unten zu drücken, was zur Folge hat, daß eine federnde Nadel (23), die die Platte an ihrem Platz hält, eingeklappt wird.

7. Vorrichtung nach einem der Ansprüche 5 und 6,
dadurch gekennzeichnet, daß jeder Plattenträger (37) eine waagrechte Sohlplatte (41), die auf dem Boden des genannten Sockels (38) aufliegt, eine senkrechte Platte (37a), die parallel zur Ebene der Platten verläuft und deren oberes Ende die Form eines Kreisbogens mit dem gleichen Radius wie die Platten hat und eine Auskehlung (29) aufweist, in der die ausgewählte Platte in Eingriff kommt, und weiterhin zwei Gleitfinger (41) aufweist, deren Innenseiten eine Auskehlung (41c) in Form eines Kreisbogens enthalten, wobei diese Finger von Federn (41a) nach oben zurückgeschoben werden.

8. Vorrichtung nach Anspruch 3,
dadurch gekennzeichnet, daß die genannte Manipulatorvorrichtung (50) einen mit Rollen (48) versehenen selbstfahrenden Wagen (49) aufweist, der senkrecht an einer Führungszunge entlang verschoben wird, die symmetrisch zu einer senkrechten Achse (zz') liegt, um die herum Säulen (44, 45, 46, 47) von Leselaufwerken für digitale Platten angeordnet sind.

9. Vorrichtung nach Anspruch 8,
dadurch gekennzeichnet, daß der selbstfahrende Wagen (49) einen Servomotor (54) aufweist, der einen Zahnkranz (52) in Drehbewegung versetzt, der mit einer waagrechten Platte (50a) fest verbunden ist und der eine kreisförmige Öffnung umgibt, die in der genannten Platte ausgesschnitten ist und auf die genannte senkrechte Achse (zz') zentriert ist, durch die die genannte Führungszunge (51) und der genannte selbstfahrende Wagen (49) sich in Eingriff befinden.

10. Vorrichtung nach Anspruch 8,
dadurch gekennzeichnet, daß die genannte waagrechte Platte (50a) eine kreisbogenförmige Führungszunge (55), die sich in einer senkrechten Ebene befindet, und einen selbstfahrenden Wagen (56) trägt, der von einem Servomotor (60) entlang der genannten kreisförmigen Zunge verfahren wird, wobei dieser Wagen eine Plattenzange (75) und einen Betätigungsmechanismus (61) für diese aufweist.

11. Vorrichtung nach Anspruch 10,
dadurch gekennzeichnet, daß die genannte Plattenzange mehrere Finger (75) mit einem Gelenkende (75a) aufweist, und daß der genannte Betätigungsmechanismus eine Welle (70) aufweist, die von einem Servomotor (71a) in Drehbewegung versetzt wird und ein Gewindeende (70b) aufweist, und er weiterhin eine Mutter (72) aufweist, die auf das genannte Gewindeende (70b) aufgeschraubt wird und durch einen Finger (87) gegen Drehung gesichert wird, wobei diese Mutter einen Schub auf ein konisches Teil (77) ausübt, das ein Öffnen der genannten gelenkigen Finger (75a) verursacht.
